# EUROPÄISCHE PATENTSCHRIFT

(11) **EP 2 436 844 B1**
(45) Veröffentlichungstag und Bekanntmachung des Hinweises auf die Patenterteilung: **13.09.2017**
(21) Anmeldenummer: 10012623.4
(22) Anmeldetag: 30.09.2010
(51) Int. Cl.: E02F 9/00, F15B 15/20, E02F 9/22, F16C 11/04

(54) **Lageranordnung**
pivot assembly
Agencement d'un palier

(43) Veröffentlichungstag der Anmeldung: 04.04.2012
(73) Patentinhaber: Klemm Bohrtechnik GmbH, 57489 Drolshagen (DE)
(72) Erfinder: Käthner, Ralf, 57462 Olpe (DE); Blens, Jochen, 51580 Reichshof (DE)
(74) Vertreter: Wunderlich, Rainer

(56) Entgegenhaltungen:
- DE-A1- 19 800 121
- FR-A1- 2 821 897
- US-A- 3 207 340
- US-A- 3 664 436
- US-A- 5 386 652

## Beschreibung

Die Erfindung betrifft eine Lageranordnung nach dem Oberbegriff des Anspruchs 1. Weiter betrifft die Erfindung eine Schwenkanordnung zum Verschwenken eines Auslegers eines Bauarbeitsgeräts nach dem Oberbegriff des Anspruchs 9 und ein Bauarbeitsgerät nach dem Oberbegriff des Anspruchs 10.

Eine gattungsgemäße Lageranordnung umfasst einen Lagerbock mit zwei einander gegenüber angeordneten Lagerwänden, in welchen jeweils ein Lagerauge ausgebildet ist, und einen Stellzylinder mit einem Zylindergehäuse, welches zwischen den gegenüberliegenden Lagerwänden des Lagerbocks angeordnet ist und Lagerzapfen aufweist, welche sich quer zu einer Längsachse des Stellzylinders erstrecken und zumindest teilweise in die Lageraugen der Lagerwände hineinragen.

Um den Stellzylinder mit seinen Lagerzapfen an dem Lagerbock zu montieren, weisen die Lagerwände bei einer bekannten Lageranordnungen einen Einführschlitz auf, über den die Lagerzapfen in das Lagerauge eingeführt werden können. Die Lageraugen sind also offen gestaltet und über den Einführschlitz mit der radialen Umgebung der Lageraugen verbunden. Es ergeben sich so insgesamt teilkreisförmige, offene Lageraugen.

Bei der bekannten Lageranordnung kann es aufgrund der offenen Lageraugen zu einer Aufweitung der Lageraugen und damit einer Beeinträchtigung der Lagerung kommen.

Die US 5,386,652 beschreibt eine Lageranordnung, bei welcher Lagerzapfen eines Hydraulikzylinders in kreisförmigen Lageraugen mit darin angeordneten Lagern aufgenommen sind.

Aus der FR 2 821 897 A1 ist eine Lageranordnung bekannt, bei der die in den Lagerwänden vorgesehenen Einführschlitze zum Einführen der Lagerzapfen eines Zylinders zu einer Seite hin offen sind, so dass die Lagerzapfen durch eine seitliche Bewegung des Zylinders in die Lageraugen eingeführt werden können. An dem offenen Ende der Lageraugen ist eine rechtwinklig von den Lagerwänden abstehende Abstützplatte vorgesehen.

Die DE 198 00 121 A1 beschreibt einen Bagger mit einem verschwenkbaren Baggergehäuse und einem Auslegerarm.

Der Erfindung liegt die **Aufgabe** zugrunde, eine Lageranordnung anzugeben, bei der ein Stellzylinder präzise und sicher an einem Lagerbock gelagert werden kann. Der Erfindung liegt ferner die Aufgabe zugrunde, eine Schwenkanordnung zum Verschwenken eines Auslegers eines Bauarbeitsgeräts und ein Bauarbeitsgerät anzugeben, welche eine präzise und sichere Verschwenkung des Auslegers ermöglichen.

Die Aufgabe wird durch eine Lageranordnung mit den Merkmalen des Anspruchs 1 gelöst. Die Aufgabe wird ferner durch eine Schwenkanordnung mit den Merkmalen des Anspruchs 9 und ein Bauarbeitsgerät mit den Merkmalen des Anspruchs 10 gelöst. Bevorzugte Ausgestaltungen der Erfindung sind in den Unteransprüchen angegeben.

Die erfindungsgemäße Lageranordnung ist dadurch gekennzeichnet, dass die Lageraugen in den Lagerwänden eine geschlossene Umfangsfläche aufweisen, wobei in mindestens einem Lagerauge eine sich in eine Außenrichtung erstreckende Ausnehmung ausgebildet ist, in welche ein Lagerzapfen des Stellzylinders durch Drehen des Stellzylinders um seine Längsachse einführbar ist.

Die Erfindung basiert auf der Erkenntnis, dass eine besonders sichere und stabile Lagerung des Stellzylinders dadurch erreicht werden kann, dass der Abstand zwischen den Enden der Lagerzapfen größer ist als der Abstand zwischen den Innenflächen der Lagerwände, so dass die Lagerzapfen in die Lageraugen der Lagerwände hineinragen. Hierdurch erfolgt eine vorteilhafte Krafteinleitung in die Lagerwände.

Ein Grundgedanke der Erfindung liegt darin, trotz der in die Lageraugen hineinragenden Lagerzapfen eine geschlossene Außenkontur der Lageraugen vorzusehen.

Ein weiterer Grundgedanke der Erfindung besteht darin, trotz der geschlossenen Lageraugen ein Einführen der bereits an dem Stellzylinder montierten Lagerzapfen in die Lageraugen zu ermöglichen. Die Erfindung schlägt hierzu vor, das Einführen der Lagerzapfen in die Lageraugen durch eine Drehung des Stellzylinders um seine Längsachse zu bewerkstelligen.

Die Möglichkeit eines solchen Eindrehens der Lagerzapfen in die Lageraugen könnte grundsätzlich dadurch geschaffen werden, dass die Lageraugen, welche üblicherweise kreisförmig gestaltet sind, in ihrer gesamten Dimensionierung entsprechend vergrößert werden. Mit solchen insgesamt sehr großen Lageraugen könnte jedoch die Stabilität der Lagerung beeinträchtigt werden. Ein wesentlicher Aspekt der Erfindung besteht demnach darin, die Lageraugen möglichst klein zu halten und zum Einführen der Lagerzapfen in zumindest einem Lagerauge lediglich eine auf den entsprechenden Lagerzapfen abgestimmte Ausnehmung vorzusehen, über welche der Lagerzapfen in das Lagerauge eingeführt beziehungsweise aus diesem entfernt werden kann.

Die radiale Ausdehnung zumindest eines Lagerauges ist somit in einem definierten, auf die Größe, insbesondere die Breite beziehungsweise den Durchmesser, des Lagerzapfens angepassten Außenbereich vergrößert. Im Übrigen ist das Lagerauge vorzugsweise kreisförmig gestaltet.

Eine bevorzugte Ausgestaltung der Erfindung besteht darin, dass der Abstand der gegenüberliegenden Lagerwände, die Dimensionierung der Lagerzapfen und die Dimensionierung der mindestens einen Ausnehmung so aufeinander abgestimmt sind, dass der Stellzylinder nach einem Drehen um seine Längsachse aus einem Zwischenraum zwischen den Lagerwänden entfernbar beziehungsweise in diesen einführbar ist.

Der Abstand zwischen einem außenseitigen Ende der Ausnehmung eines ersten Lagerauges und einem entsprechend diagonal gegenüberliegenden Umfangsbereich des zweiten Lagerauges ist so bemessen, dass er in etwa dem Abstand der beiden Enden der Lagerzapfen entspricht. Dies ermöglicht es, die Lagerzapfen durch Drehen des Stellzylinders um seine Längsachse über die mindestens eine Ausnehmung aus den Lageraugen heraus- beziehungsweise in diese hineinzudrehen. Nach diesem Heraus- beziehungsweise Hineindrehen kann der Stellzylinder aus dem Zwischenraum zwischen den Lagerwänden entfernt beziehungsweise umgekehrt in diesen eingeführt werden.

In einer bevorzugten Ausgestaltung ist der Stellzylinder ein hydraulischer oder pneumatischer Hubzylinder. Ein solcher Hubzylinder weist üblicherweise ein Zylindergehäuse und einen Hubkolben auf. Der Hubkolben kann zur Betätigung mit einer Kolbenstange verbunden sein. An einem äußeren, dem Zylindergehäuse gegenüberliegenden Ende der Kolbenstange kann eine Anlenkeinrichtung zum Anlenken des Stellzylinders an ein Bauteil vorgesehen sein.

Der Lagerbock ist vorzugsweise ebenfalls an ein Bauteil koppelbar und kann hierzu vorzugsweise fest mit diesem, beispielsweise durch Schweißen oder Verschrauben, verbunden werden. Der Hubzylinder ist somit einerseits über das Zylindergehäuse und den Lagerbock an ein erstes Bauteil und andererseits über die Kolbenstange und die Anlenkeinrichtung an ein zweites Bauteil koppelbar. Durch Ein- bzw. Ausfahren des Hubkolbens in bzw. aus dem Zylindergehäuse kann eine Relativbewegung zwischen den beiden Bauteilen erzeugt werden, beispielsweise um das zweite Bauteil gegenüber dem ersten Bauteil zu verschwenken.

In einer bevorzugte Ausgestaltung der Erfindung sind die Lagerzapfen mittels eines Befestigungsrings, welcher um eine äußere Mantelfläche des Stellzylinders angeordnet ist, an dem Stellzylinder befestigt. Der Befestigungsring, welcher auch als Gürtel bezeichnet werden kann, weist vorzugsweise eine im Wesentlichen ringförmige Form auf und ist um zumindest einen Teilbereich der äußeren Umfangsfläche des Stellzylinders, insbesondere des Zylindergehäuses, angeordnet. Der Befestigungsring kann grundsätzlich auf beliebige Weise an dem Zylindergehäuse befestigt sein. In einer bevorzugten Ausgestaltung ist der Befestigungsring jedoch an das Zylindergehäuse angeschweißt. Hierdurch wird eine besonders stabile Befestigung des Befestigungsrings an dem Zylindergehäuse erzielt.

Die Lagerzapfen sind ihrerseits vorzugsweise fest mit dem Befestigungsring verbunden, beispielsweise verschweißt, oder integral mit diesem ausgebildet. Insgesamt wird so eine sehr stabile Verbindung zwischen Lagerzapfen und Zylindergehäuse erzeugt, welche zu einer weitgehend spielfreien Lagerung beiträgt.

Grundsätzlich ist es ausreichend, wenn lediglich eines der Lageraugen eine Ausnehmung aufweist. Zum Entfernen der Lagerzapfen aus dem Lagerauge muss dann ausgehend von der Lagerstellung gegebenenfalls zusätzlich zu der Drehbewegung des Stellzylinders eine Translationsbewegung ausgeführt werden. Umgekehrt muss zum Einführen der Lagerzapfen in das Lagerauge eine korrigierende Translationsbewegung ausgeführt werden.

In einer bevorzugten Ausgestaltung ist in beiden Lageraugen eine Ausnehmung ausgebildet. Im Vergleich zu einer Ausführungsform mit lediglich einer einzelnen Ausnehmung kann hierbei die Tiefe der beiden Ausnehmungen gegenüber der Tiefe der einzelnen Ausnehmung verringert werden.

Die Ausnehmungen sind vorzugsweise so einander diagonal gegenüberliegend angeordnet, dass die Lagerzapfen durch eine Drehung des Stellzylinders um seine Längsachse in die Ausnehmungen einführbar beziehungsweise aus diesen entfernbar sind. Dabei ist es bevorzugt, dass die Ausnehmungen in den Lageraugen um 180° zueinander gedreht sind.

Der Abstand zwischen den außenseitigen Enden der Ausnehmungen ist vorzugsweise so bemessen, dass er in etwa dem Abstand der beiden Enden der Lagerzapfen entspricht beziehungsweise etwas größer ist, um ein Eindrehen der Lagerzapfen zu ermöglichen.

Die Ausnehmungen können grundsätzlich hinsichtlich Form und Größe gleich ausgeführt sein. Das Entfernen beziehungsweise Einführen der Lagerzapfen in die Lageraugen gestaltet sich dann besonders einfach, da die Lagerzapfen allein durch Drehung des Stellzylinders, ohne korrigierende Translationsbewegung, in ihre Lagerposition gebracht werden können.

Um die Stabilität der Lageranordnung noch weiter zu erhöhen, kann es vorteilhaft sein, die Ausnehmungen, insbesondere hinsichtlich ihrer Tiefe, unterschiedlich zu gestalten. Dabei kann insbesondere diejenige Ausnehmung, die in Richtung eines weniger stabilen Bereiches der Lagerplatte weist, mit einer geringeren Tiefe ausgeführt sein. Beispielsweise kann diejenige Ausnehmung, die von dem Basiselement weg weist, eine geringere Tiefe und diejenige Ausnehmung, die in Richtung des Basiselements weist, eine größere Tiefe aufweisen.

Die Lageraugen in den Lagerwänden sind vorzugsweise größer als die Lagerzapfen. Insbesondere kann eine radiale Ausdehnung der Lageraugen größer sein als eine radiale Ausdehnung der Lagerzapfen. Um die Lagerzapfen in den Lageraugen beziehungsweise an den Lagerwänden zu lagern, ist vorzugsweise mindestens ein Lagerelement mit einem Ringelement vorgesehen, wobei das Ringelement zur Lagerung eines Lagerzapfens zwischen einer inneren Umfangsfläche eines Lagerauges und einer äußeren Umfangsfläche des Lagerzapfens angeordnet ist.

Sowohl Lagerzapfen als auch Lageraugen sind vorzugsweise im Wesentlichen kreisförmig gestaltet. Das Ringelement kann nach Einsetzen eines Lagerzapfens in das entsprechende Lagerauge in einen Zwischenraum zwischen Lagerzapfen und Lagerauge eingeführt werden, um den Lagerzapfen in dem Lagerauge zu lagern.

Vorzugsweise weist das Lagerelement eine das Lagerauge und/oder den Lagerzapfen abdeckende Lagerkappe auf. Durch diese kann die Lagerung sicher, beispielsweise vor Schmutz oder anderen äußeren Einwirkungen, geschützt werden. Das Lagerelement kann vorzugsweise von außen auf die entsprechende Lagerwand aufgesetzt werden. Lagerkappe und Ringelement sind vorzugsweise einstückig ausgebildet.

Die erfindungsgemäße Schwenkanordnung ist dazu vorgesehen, einen Ausleger eines Bauarbeitsgerätes, insbesondere eines Bohrgeräts, zu verschwenken. Die Schwenkanordnung weist zwei Stellzylinder auf, die zum Verschwenken des Auslegers gegenläufig betreibbar sind und ist dadurch gekennzeichnet, dass mindestens eine Lageranordnung, wie vorstehend beschrieben, vorgesehen ist. Hierdurch werden bei einer Schwenkanordnung die im Zusammenhang mit der Lageranordnung beschriebenen Vorteile und Effekte erzielt.

Das erfindungsgemäße Bauarbeitsgerät, insbesondere Bohrgerät, weist einen verschwenkbaren Ausleger auf und ist dadurch gekennzeichnet, dass mindestens eine Schwenkanordnung, wie vorstehend beschrieben, vorgesehen ist. Bei dem Bauarbeitsgerät kann es sich insbesondere um ein Bohrgerät mit einer verschwenkbar an einem Grundrahmen angeordneten Lafette handeln. Mittels der Schwenkanordnung kann die Lafette, an der beispielsweise ein Schlitten mit einem Bohrantrieb verfahrbar geführt sein kann, gegenüber dem Grundrahmen verschwenkt werden.

Die Erfindung wird nachfolgend anhand der beigefügten schematischen Zeichnungen weiter erläutert. Hierin zeigt:
- Fig. 1: eine perspektivische Ansicht einer Lagerordnung nach dem Stand der Technik mit einem in einen Einführschlitz eingeführten Stellzylinder;
- Fig. 2: eine Schnittansicht der Lageranordnung nach Fig. 1;
- Fig. 3: eine perspektivische Ansicht der Lagerordnung nach Fig. 1 mit dem Stellzylinder in Endposition zwischen den Lagerwänden;
- Fig. 4: eine Schnittansicht der Lageranordnung nach Fig. 1 mit dem Stellzylinder in Endposition zwischen den Lagerwänden gemäß Fig. 3;
- Fig. 5: eine perspektivische Ansicht der Lageranordnung nach Fig. 1 mit einem eingesetzten Lagerelement;
- Fig. 6: eine Schnittanischt der Lageranordnung nach Fig. 1 mit einem eingesetzten Lagerelement gemäß Fig. 5;
- Fig. 7: eine erste Seitenansicht eines Stellzylinders;
- Fig. 8: eine zweite Seitenansicht eines Stellzylinders;
- Fig. 9: eine Vorderansicht eines Stellzylinders;
- Fig. 10: eine perspektivische Ansicht einer ersten Ausführungsform einer erfindungsgemäßen Lageranordnung mit gedrehtem Stellzylinder über dem Lagerbock;
- Fig. 11: eine perspektivische Ansicht der Lageranordnung nach Fig. 10 mit dem Stellzylinder in einer ersten Eindrehposition zwischen den Lagerwänden;
- Fig. 12: eine Schnittansicht der Lageranordnung nach Fig. 10 mit dem Stellzylinder in einer ersten Eindrehposition zwischen den Lagerwänden gemäß Fig. 11;
- Fig. 13: eine perspektivische Ansicht der Lageranordnung nach Fig. 10 mit dem Stellzylinder in einer zweiten Eindrehposition zwischen den Lagerwänden;
- Fig. 14: eine Schnittansicht der Lageranordnung nach Fig. 10 mit dem Stellzylinder in einer zweiten Eindrehposition zwischen den Lagerwänden gemäß Fig. 13;
- Fig. 15: eine perspektivische Ansicht der Lageranordnung nach Fig. 10 mit dem Stellzylinder in Endposition zwischen den Lagerwänden;
- Fig. 16: eine Schnittansicht der Lageranordnung nach Fig. 10 mit dem Stellzylinder in Endposition zwischen den Lagerwänden gemäß Fig. 15;
- Fig. 17: eine perspektivische Ansicht der Lageranordnung nach Fig. 10 mit einem eingesetzten Lagerelement;
- Fig. 18: eine Schnittansicht der Lageranordnung nach Fig. 10 mit einem eingesetzten Lagerelement gemäß Fig. 17;
- Fig. 19: eine perspektivische eine zweiten Ausführungsform einer erfindungsgemäßen Lageranordnung mit einem gedrehten Stellzylinder über dem Lagerbock;
- Fig. 20: eine perspektivische Ansicht der Lageranordnung nach Fig. 19 mit dem Stellzylinder in einer ersten Eindrehposition zwischen den Lagerwänden;
- Fig. 21: eine Schnittansicht der Lageranordnung nach Fig. 19 mit dem Stellzylinder in einer ersten Eindrehposition zwischen den Lagerwänden gemäß Fig. 20;
- Fig. 22: eine perspektivische Ansicht der Lageranordnung nach Fig. 19 mit dem Stellzylinder in einer zweiten Eindrehposition zwischen den Lagerwänden;
- Fig. 23: eine Schnittansicht der Lageranordnung nach Fig. 19 mit dem Stellzylinder in einer zweiten Eindrehposition zwischen den Lagerwänden gemäß Fig. 22;
- Fig. 24: eine perspektivische Ansicht der Lageranordnung nach Fig. 19 mit dem Stellzylinder in Endposition zwischen den Lagerwänden;
- Fig. 25: eine Schnittansicht der Lageranordnung nach Fig. 19 mit dem Stellzylinder in Endposition zwischen den Lagerwänden gemäß Fig. 24;
- Fig. 26: eine perspektivische Ansicht der Lageranordnung nach Fig. 19 mit einem eingesetzten Lagerelement;
- Fig. 27: eine Schnittansicht der Lageranordnung nach Fig. 19 mit einem eingesetzten Lagerelement gemäß Fig. 26;
- Fig. 28: eine perspektivische Ansicht einer erfindungsgemäßen Schwenkanordnung ohne Lagerelement;
- Fig. 29: eine perspektivische Ansicht der Schwenkanordnung nach Fig. 28 mit eingesetztem Lagerelement;
- Fig. 30: eine teilgeschnittene Seitenansicht der Schwenkanordnung nach Fig. 29;
- Fig. 31: eine Ansicht von oben auf die Schwenkanordnung nach Fig. 29.

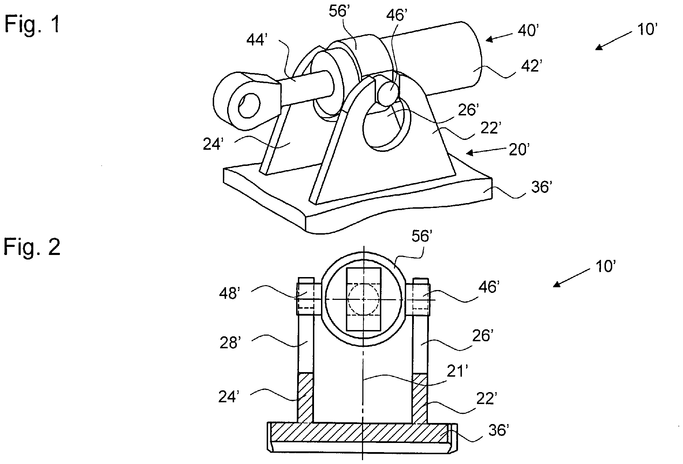

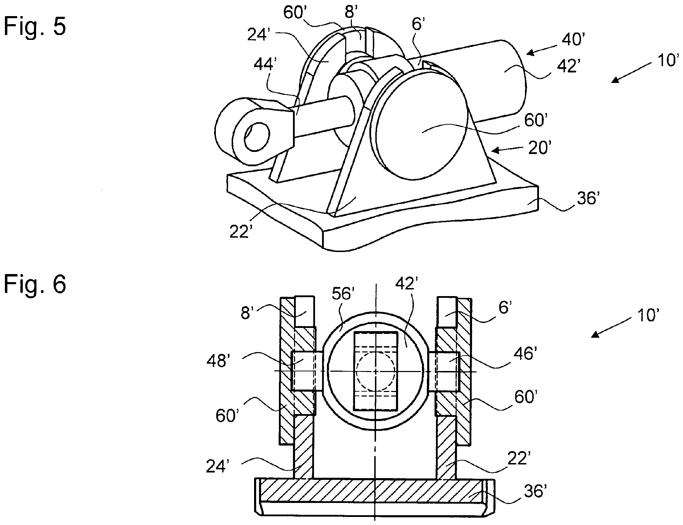

Eine Lageranordnung 10' mit offenen Lageraugen 26', 28' nach dem Stand der Technik ist in den Figuren 1 bis 6 dargestellt.

Die Lageranordnung10' umfasst einen Lagerbock 20' mit zwei parallel zueinander angeordneten Lagerwänden 22', 24', die an einem Basiselement 36' angebracht sind. In jedem der Lagerwände 22', 24' ist ein teilkreisförmig gestaltetes Lagerauge 26', 28' ausgebildet. Die Lageraugen 26', 28' sind nach außen offen und weisen jeweils einen Einführschlitz 6', 8' auf, die einander gegenüberliegend angeordnet sind.

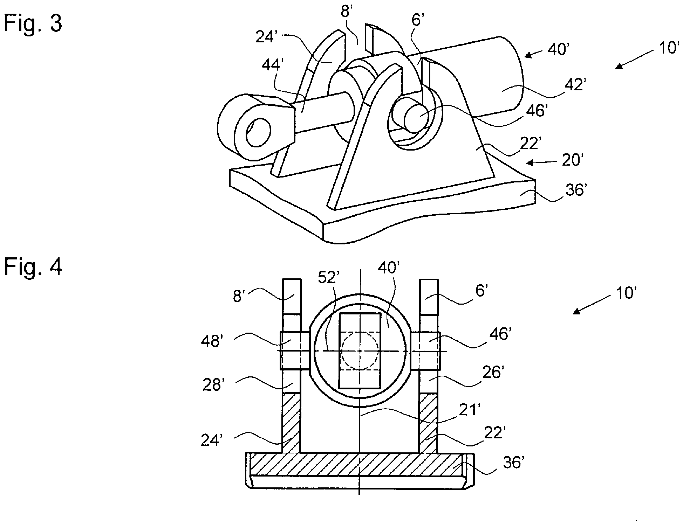

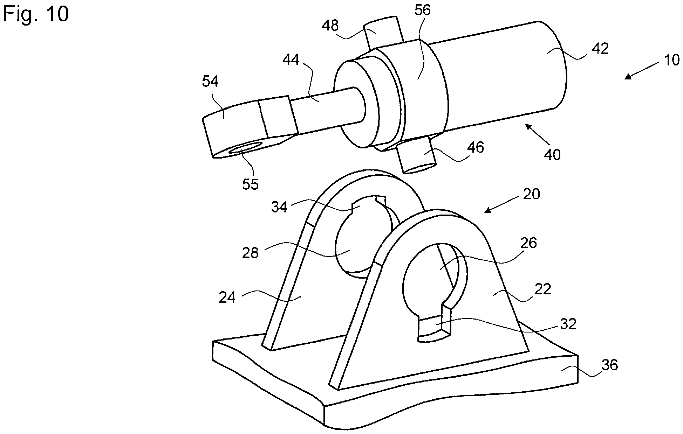

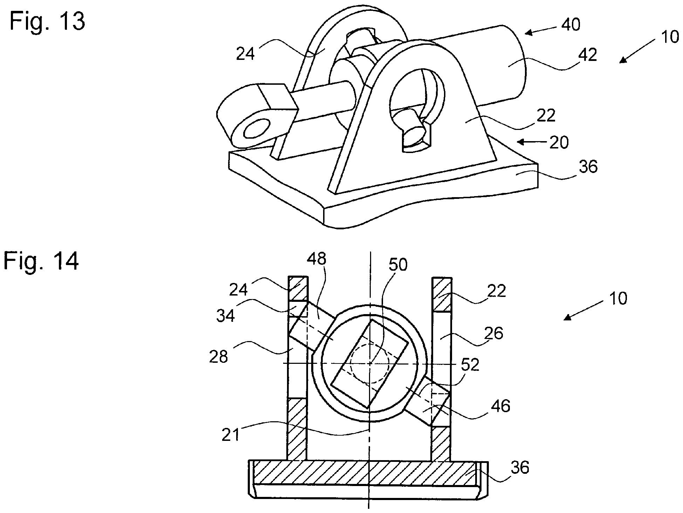

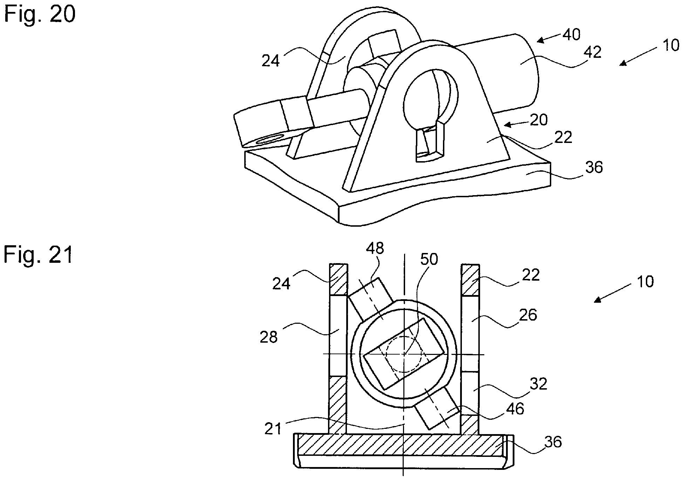

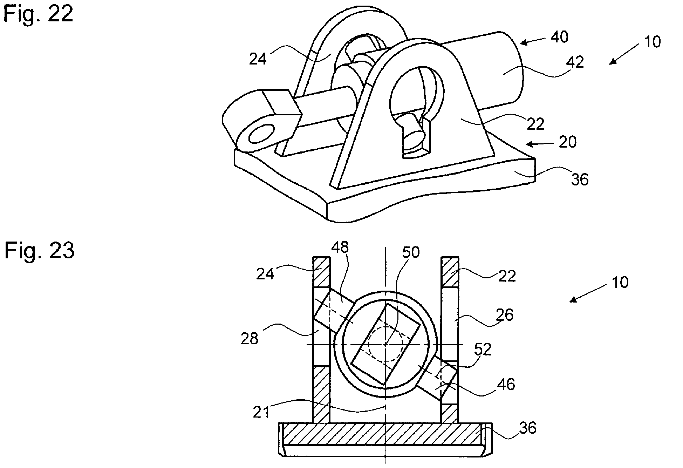

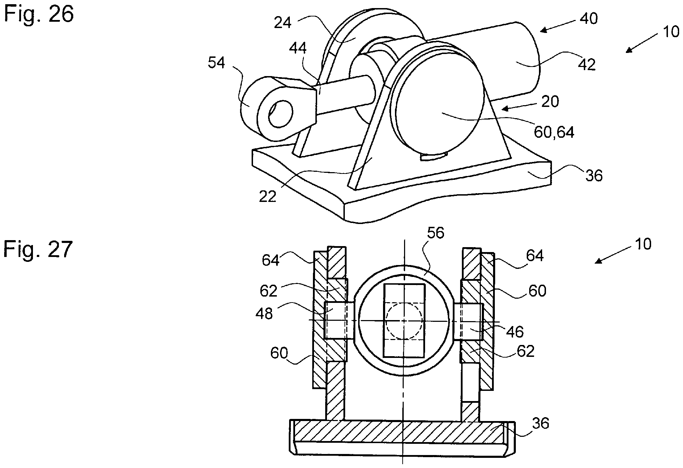

Die Lageranordnung 10' umfasst weiterhin einen Stellzylinder 40' mit einem Zylindergehäuse 42' und einem Hubkolben mit Kolbenstange 44'. Der Stellzylinder 40' ist an dem Lagerbock 20' um eine Drehachse 52' gelagert (Fig. 4). Der Stellzylinder 40' weist hierzu zwei Lagerzapfen 46', 48' auf, die über die Einführschlitze 6', 8' in die Lageraugen 24', 26' eingeführt beziehungsweise aus diesen entfernt werden können. Die Lagerzapfen 46', 48' sind mittels eines erfindungsgemäßen Befestigungsrings 56', welche im Zusammenhang mit den Figuren 10 bis 27 weiter erläutert wird, an dem Stellzylinder 40' befestigt.

Zum Lagern des Stellzylinders 40' an dem Lagerbock 20' wird der Stellzylinder 40' zunächst so ausgerichtet, dass seine Lagerzapfen 46', 48' senkrecht zu den Lagerwänden 22', 24' des Lagerbocks 20' ausgerichtet sind. Die Lagerzapfen 46', 48' werden sodann durch eine translatorische Bewegung des Stellzylinders 40' entlang einer zentralen Mittenebene 21' zwischen den Lagerwänden 22', 24' über die Einführschlitze 6', 8' in die Lageraugen 26', 28' eingeführt, wie in den Figuren 1 bis 4 dargestellt.

Anschließend wird ein erfindungsgemäßes Lagerelement 60', welches im Zusammenhang mit den Figuren 10 bis 27 weiter erläutert wird, jeweils zwischen einem Lagerzapfen 46', 48' und der entsprechenden Lagerwand 22', 24' angeordnet, um den Lagerzapfen 46', 48' an der Lagerwand 22', 24' zu lagern.

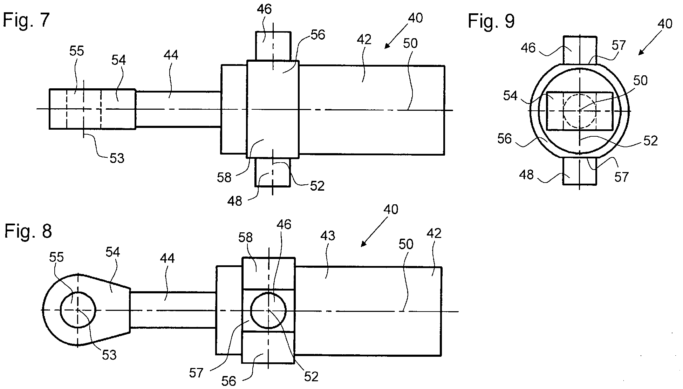

Ein erfindungsgemäßer Stellzylinder 40 ist in verschiedenen Ansichten in den Figuren 7 bis 9 dargestellt.

Der Stellzylinder 40 entspricht im Wesentlichen dem in den Figuren 1 bis 6 dargestellten bekannten Stellzylinder 40'.

Der Stellzylinder 40 umfasst ein Zylindergehäuse 42 und einen Hubkolben mit einer Kolbenstange 44. Der Hubkolben ist innerhalb des Zylindergehäuses 42 entlang einer Längsachse 50 des Stellzylinders 40 verschiebbar gelagert.

Der Stellzylinder 40 weist zwei koaxial zueinander ausgerichtete Lagerzapfen 46, 48 auf, welche an dem Zylindergehäuse 42 befestigt sind. Eine gemeinsame Längsachse der Lagerzapfen 46, 48 bildet eine Drehachse 52 des Stellzylinders 40, die sich quer, insbesondere senkrecht, zur Längsachse 50 erstreckt.

Zur Befestigung der Lagerzapfen 46, 48 an dem Zylindergehäuse 42 ist ein Befestigungsring 56 vorgesehen, der an dem Zylindergehäuse 42 befestigt ist. Die Lagerzapfen 46, 48 sind ihrerseits an dem Befestigungsring 56 befestigt. Der Befestigungsring 56, welcher auch als Gürtel bezeichnet werden kann, ist im Wesentlichen kreisringförmig mit einer zylinderförmigen Mantelfläche 58 gestaltet. An den Bereichen, an denen die Lagerzapfen 46, 48 angebracht sind, weist der Befestigungsring 56 jeweils eine Abflachung 57 seiner äußeren Umfangsfläche auf.

An der Kolbenstange 44 ist ein Anlenkelement 54 mit einem Lagerauge 55 vorgesehen. Mittels des Lagerauges 55 kann die Kolbenstange 44 um eine Drehachse 53, welche parallel zu der Drehachse 52 verläuft, drehbar gelagert werden. Hierzu kann beispielsweise ein Zapfen in das Lagerauge 55 eingeführt werden.

Eine erste Ausführungsform einer erfindungsgemäßen Lageranordnung 10 ist in den Figuren 10 bis 18 dargestellt.

Die Lageranordnung 10 umfasst einen Lagerbock 20 und einen Stellzylinder 40, welcher an dem Lagerbock 20 lagerbar ist.

Der Lagerbock 20 umfasst ein Basiselement 36, an dem zwei Lagerwände 22, 24 angebracht oder befestigt sind. Das Basiselement 36 kann grundsätzlich beliebig gestaltet sein. In einer bevorzugten Ausgestaltung handelt es sich bei dem Basiselement 36 um ein plattenförmiges oder quaderförmiges Element. Eine Oberfläche des Basiselements 36 erstreckt sich im Wesentlichen quer oder senkrecht zu den Lagerwänden 22, 24, die parallel zueinander angeordnet sind. Zwischen den Lagerwänden 22, 24 ist ein Zwischenraum 12 gebildet, in welchen der Stellzylinder 40 eingeführt werden kann.

In jedem der Lagerwände 22, 24 ist ein Lagerauge 26, 28 ausgebildet, welches im Wesentlichen kreisförmig gestaltet ist und eine geschlossene Umfangsfläche 30 aufweist. Die Lageraugen 26, 28 sind einander gegenüberliegend in den Lagerwänden 22, 24 angeordnet und weisen eine gemeinsame Mittenachse 27 auf, entlang welcher der Stellzylinder 40 drehbar an dem Lagerbock 20 gelagert werden kann.

Jedes Lagerauge 26, 28 weist eine sich radial erstreckende Ausnehmung 32, 34 auf, das heißt, im Bereich der Ausnehmung 32, 34 ist eine radiale Erstreckung des Lagerauges 26, 28 ausgehend von der Mittenachse 27 vergrößert. Die Ausnehmungen 32, 34 haben eine gleiche Breite und unterschiedliche Tiefen. Die Breite entspricht in etwa einem Durchmesser der Lagerzapfen 46, 48.

Die Ausnehmungen 32, 34 sind einander diagonal gegenüberliegend in den Lagerwänden vorgesehen. Dabei weist eine der Ausnehmungen 32, 34 in Richtung des Basiselements 36 und die weitere Ausnehmung von dem Basiselement 36 weg. In dem dargestellten Ausführungsbeispiel ist die in Richtung des Basiselements 30 weisende Ausnehmung 32 tiefer als die gegenüberliegende Ausnehmung 34.

Die Figuren 10 bis 16 zeigen einzelne Schritte des Einführens des Stellzylinders 40 in den Zwischenraum 12 des Lagerbocks 20 und des Einführens der Lagerzapfen 46, 48 in die Lageraugen 22, 24.

Zum Einführen des Stellzylinders 40 in den Zwischenraum 12 zwischen den Lagerwänden 22, 24 wird der Stellzylinder 40 zunächst parallel zu den Lagerwänden 22, 24 ausgerichtet und in eine Drehposition gebracht, bei welcher die Drehachse 52 des Stellzylinders 40 schräg zur Mittenachse 27 der Lageraugen 26, 28 verläuft. Der Stellzylinder 40 wird dann entlang einer zentralen Mittenebene 21, welche parallel zu den Lagerwänden 22, 24 zwischen diesen verläuft, in den Zwischenraum 12 eingeführt.

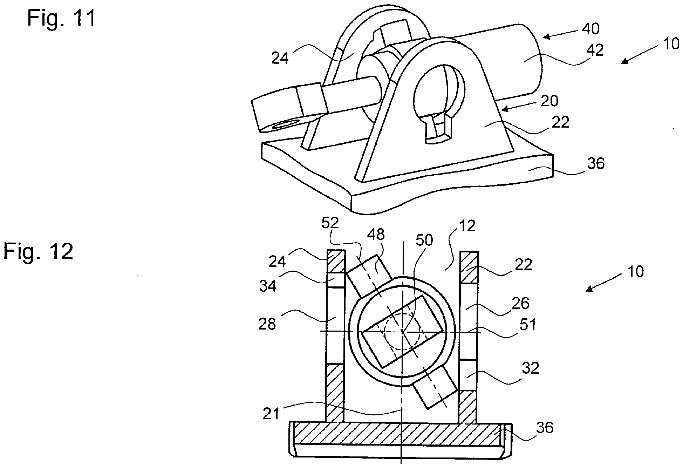

Sobald dies aufgrund der Ausnehmungen 32, 34 in den Lageraugen 24, 26 möglich ist, wird die Translationsbewegung des Stellzylinders 40 beendet und der Stellzylinder 40 um seine Längsachse 50 soweit gedreht, bis die Drehachse 52 parallel zur Mittenachse 27 des Lagerbocks 20 verläuft. Dabei werden die Lagerzapfen 46, 48 über die Ausnehmungen 32, 34 in die Lageraugen 26, 28 eingeführt. Nach dem Drehen des Stellzylinders 40 um die Längsachse 50 verläuft die Dreh- oder Querachse 52 aufgrund der unterschiedlich tiefen Ausnehmungen 32, 34 parallel versetzt zu der Mittenachse 27 (Fig. 12).

Anschließend wird der Stellzylinder 40 durch eine weitere Translationsbewegung entlang der zentralen Mittenebene 21 so weit verschoben, bis die Drehachse 52 des Stellzylinders 40 mit der Mittenachse 27 des Lagerbocks 20 übereinstimmt.

Wie insbesondere aus den Figuren 11 bis 14 ersichtlich, sind die Ausnehmungen 32, 34 gerade so dimensioniert, dass ein Eindrehen der Lagerzapfen 46, 48 ermöglicht wird. Eine Breite der Ausnehmungen 32, 34 entspricht daher etwa dem Radius der Lagerzapfen 46, 48. Die Tiefe der diagonal gegenüberliegenden Ausnehmungen 32, 34 ist so gewählt, dass die Lagerzapfen 46, 48 über die Ausnehmungen 32, 34 in die im Übrigen kreisförmigen Lageraugen 26, 28 eingeführt werden können.

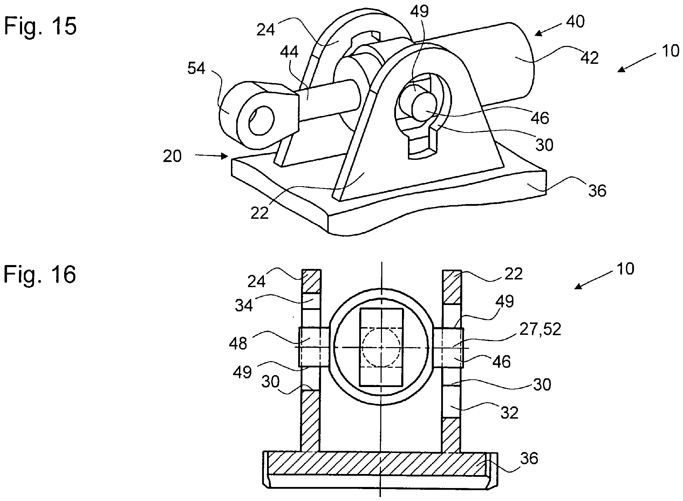

Die endgültige Lagerposition des Stellzylinders 40 relativ zum Lagerbock 20 ist in den Figuren 15 und 16 dargestellt. Die Drehachse 52 des Stellzylinders 40 stimmt mit der Mittenachse 27 des Lagerbocks 20 überein. In dieser Lagerposition ist zwischen den Lagerzapfen 46, 48 und den Lageraugen 26, 28 ein ringförmiger Zwischenraum gebildet.

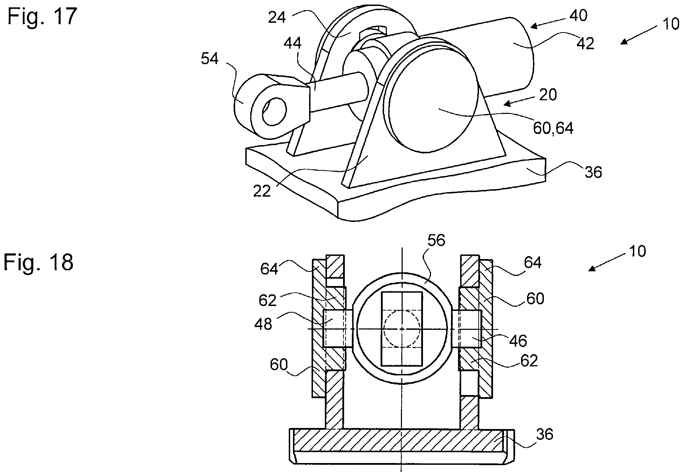

Um die Lagerzapfen 46, 48 an den Lagerwänden 22, 24 zu lagern, wird ein Lagerelement 60 zwischen eine äußere Umfangsfläche 49 der Lagerzapfen 46, 48 und die innere Umfangsfläche 30 der Lageraugen 26, 28 eingesetzt, wie in den Figuren 17 und 18 dargestellt.

Das Lagerelement 60 umfasst ein Ringelement 62, welches zwischen der äußeren Umfangsfläche 49 der Lagerzapfen 46, 48 und der inneren Umfangsfläche 30 der Lageraugen 24, 26 angeordnet ist. Das Lagerelement 60 umfasst ferner eine Lagerkappe 64, die vorzugsweise einstückig mit dem Ringelement 62 ausgebildet ist und die Lageraugen 26, 28 und die Lagerzapfen 46, 48 abdeckt.

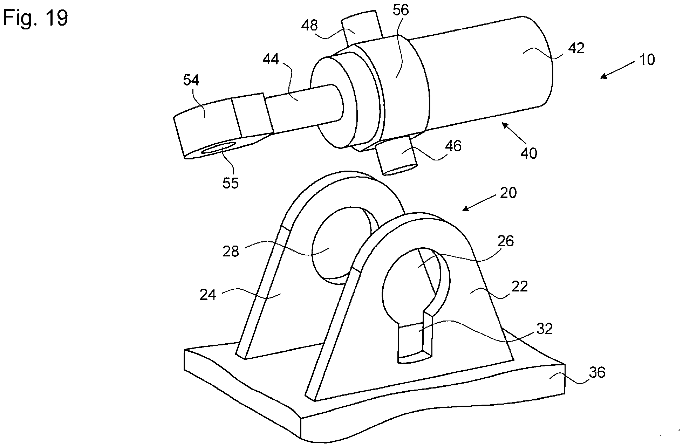

Eine zweite Ausführungsform einer erfindungsgemäßen Lageranordnung 10 ist in den Figuren 19 bis 27 dargestellt. Der Stellzylinder 40 entspricht dem mit Bezug auf die erste Ausführungsform erläuterten Stellzylinder.

Im Unterschied zu der ersten Ausführungsform weist der Lagerbock 20 der zweiten Ausführungsform ein erstes Lagerauge 26 mit einer Ausnehmung 32 auf und ein zweites Lagerauge 26, das kreisförmig ohne Ausnehmung ausgeführt ist. Die einzelne Ausnehmung 32 weist in Richtung des Basiselements 36.

Zum Einführen des Stellzylinders 40 in den Zwischenraum 12 zwischen den Lagerwänden 24, 26 wird der Stellzylinder 40 zunächst, wie im Zusammenhang mit der ersten Ausführungsform beschrieben, oberhalb des Lagerbocks 20 angeordnet und in eine Drehposition gebracht, in welcher die Drehsachse 52 des Stellzylinders 40 schräg zu der Mittenachse 27 der Lageraugen 26, 28 verläuft.

Der Stellzylinder 40 wird anschließend durch Translation entlang der zentralen Mittenebene 21 des Lagerbocks 20 in den Zwischenraum 12 zwischen den Lagerwänden 22, 24 eingeführt, bis der Stellzylinder 40 eine Position erreicht hat, in welcher die Lagerzapfen 46, 48 durch Drehung des Stellzylinders 40 um seine Längsachse 50 in die Lageraugen 26, 28 eingeführt werden können. Der Stellzylinder 40 wird hierzu um die Längsachse 50 gedreht, bis die Drehachse 52 parallel und beabstandet zu der Mittenachse 27 des Lagerbocks 20 verläuft.

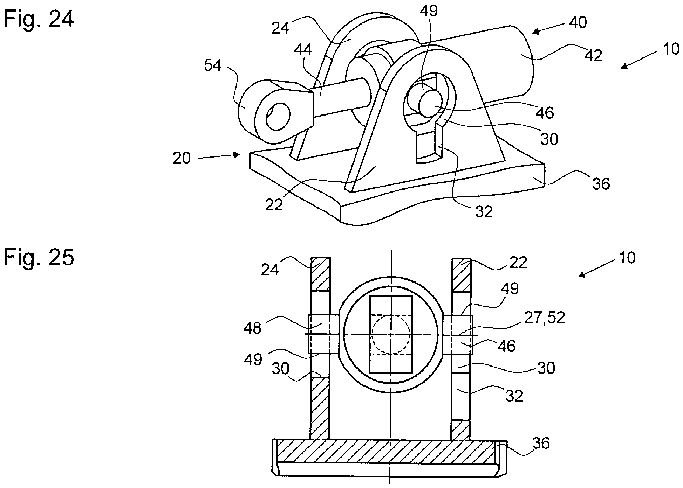

Der Stellzylinder 40 wird anschließend durch eine translatorische Rückbewegung in seine endgültige Lagerposition gebracht, in welcher die Drehachse 52 innerhalb der Mittenachse 27 verläuft. Die endgültige Lagerposition ist in den Figuren 24 und 25 dargestellt.

Entsprechend der oben beschriebenen Vorgehensweise wird anschließend ein Lagerelement 60 jeweils zwischen den Lagerzapfen 46, 48 und der entsprechenden Umfangsfläche 30 der Lageraugen 26, 28 angeordnet.

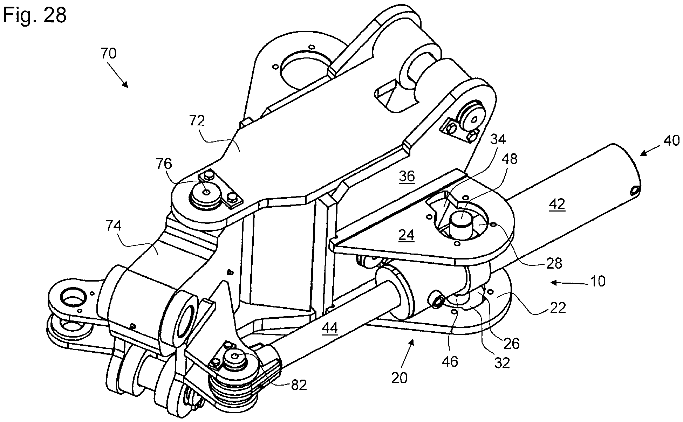

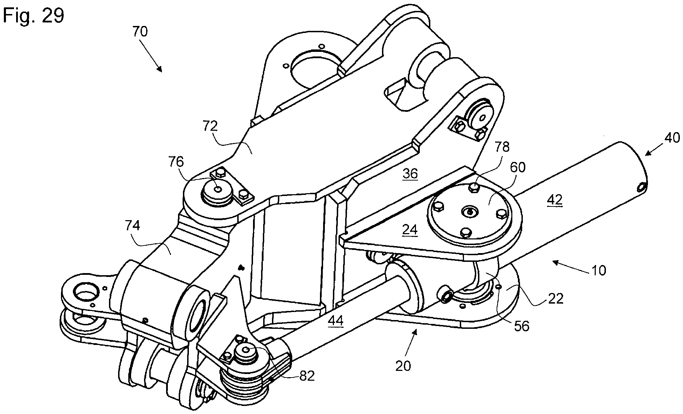

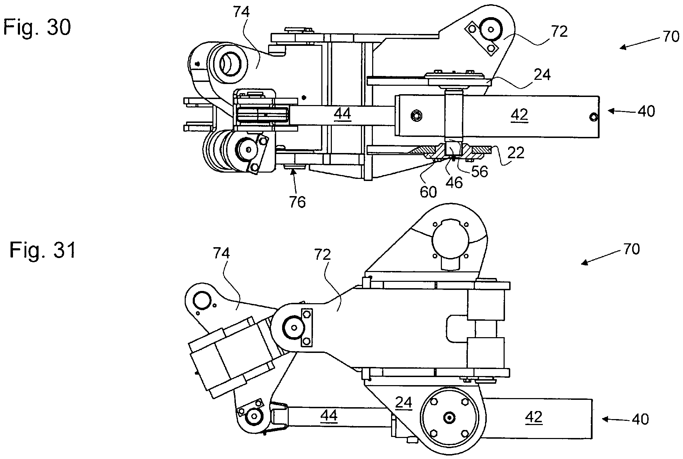

Eine erfindungsgemäße Schwenkanordnung 70 ist in den Figuren 28 bis 31 dargestellt. Die Schwenkanordnung 70 weist ein erstes Schwenkteil 72 und ein zweites Schwenkteil 74 auf, welche um eine Schwenkachse 76 zueinander schwenkbar gelagert sind. Zum Verschwenken des ersten Schwenkteils 72 gegenüber dem zweiten Schwenkteil 74 sind zwei Stellzylinder 40 vorgesehen, von denen in den Figuren nur einer dargestellt ist. Bei den Stellzylindern 40, welche auch als Schwenkzylinder bezeichnet werden können, kann es sich beispielsweise um Hydraulik- oder Pneumatikzylinder handeln. Die Stellzylinder 40 sind so angeordnet, dass durch einen gegenläufig gesteuerten Betrieb der Stellzylinder 40 ein aktives Schwenken des zweiten Schwenkteils 74 gegenüber dem ersten Schwenkteil 72 bewirkt wird. Die Schwenkzylinder 40 sind hierzu einerseits an dem ersten Schwenkteil 72 und andererseits an dem zweiten Schwenkteil 74 angelenkt.

Das erste Schwenkteil 72 kann beispielsweise an einem Grundrahmen eines Bauarbeitsgeräts befestigt oder angelenkt sein. An dem zweiten Schwenkteil 74 kann beispielsweise ein Ausleger mit einer Lafette angeordnet sein. Durch Verschwenken des zweiten Schwenkteils 74 gegenüber dem ersten Schwenkteil 72 kann der Ausleger, gegebenenfalls mit der Lafette, gegenüber dem Grundrahmen, beispielsweise um eine vertikale Schwenkachse, verschwenkt werden.

Zum Verschwenken des zweiten Schwenkteils 74 gegenüber dem ersten Schwenkteil 72 sind zwei Lageranordnungen 10 vorgesehen, wie sie in Bezug auf die Figuren 10 bis 27 beschrieben wurden. Die Lagerelemente 60 sind fest an den Lagerwänden 22, 24 angebracht. Die Lagerkappen 64 sind hierzu mit Schrauben 78 an den Lagerwänden 22, 24 angeschraubt.

Die Lagerwände 22, 24 und das Basiselement 36 des Lagerbocks 20 sind fest an dem ersten Schwenkteil 72 angebracht. Das zweite Schwenkteil 74 ist jeweils über einen Zapfen 82 an dem Lagerauge 55 der Kolbenstange 44 gelagert. Durch Ausfahren des einen Hubkolbens und Einfahren des anderen Hubkolbens wird das zweite Schwenkteil 74 gegenüber dem ersten Schwenkteil 72 verschwenkt

## Patentansprüche

1. Lageranordnung mit
- einem Lagerbock (20) mit zwei einander gegenüberliegend und parallel zueinander angeordneten Lagerwänden (22, 24), in welchen jeweils ein Lagerauge (26, 28) ausgebildet ist, und
- einem Stellzylinder (40) mit einem Zylindergehäuse (42), welches zwischen den gegenüberliegenden Lagerwänden (22, 24) des Lagerbocks (20) angeordnet ist und Lagerzapfen (46, 48) aufweist, welche sich quer zu einer Längsachse (50) des Stellzylinders (40) erstrecken und zumindest teilweise in die Lageraugen (26, 28) der Lagerwände (22, 24) hineinragen,
**dadurch gekennzeichnet,**
**dass** die Lageraugen (26, 28) in den parallel zueinander angeordneten Lagerwänden (22, 24) eine geschlossene Umfangsfläche (30) aufweisen, wobei in mindestens einem Lagerauge (26) eine sich in eine Außenrichtung erstreckende Ausnehmung (32) ausgebildet ist, in welche ein Lagerzapfen (46) des Stellzylinders (40) durch Drehen des Stellzylinders (40) um seine Längsachse (50) einführbar ist.

2. Lageranordnung nach Anspruch 1,
**dadurch gekennzeichnet,**
**dass** der Abstand der gegenüberliegenden Lagerwände (22, 24), die Dimensionierung der Lagerzapfen (46, 48) und die Dimensionierung der mindestens einen Ausnehmung (32) so aufeinander abgestimmt sind, dass der Stellzylinder (40) nach einem Drehen um seine Längsachse (50) aus einem Zwischenraum (12) zwischen den Lagerwänden (22, 24) entfernbar beziehungsweise in diesen einführbar ist.

3. Lageranordnung nach Anspruch 1 oder 2,
**dadurch gekennzeichnet,**
**dass** der Stellzylinder (40) ein hydraulischer oder pneumatischer Hubzylinder ist.

4. Lageranordnung nach einem der Ansprüche 1 bis 3,
**dadurch gekennzeichnet,**
**dass** die Lagerzapfen (46) mittels eines Befestigungsrings (56), welcher um eine äußere Mantelfläche (58) des Stellzylinders (40) angeordnet ist, an dem Stellzylinder (40) befestigt sind.

5. Lageranordnung nach einem der Ansprüche 1 bis 4,
**dadurch gekennzeichnet,**
**dass** in beiden Lageraugen (26, 28) eine Ausnehmung (32, 34) ausgebildet ist.

6. Lageranordnung nach Anspruch 5,
**dadurch gekennzeichnet,**
**dass** die Ausnehmungen (32, 34) in den Lageraugen (26, 28) um 180° zueinander gedreht sind.

7. Lageranordnung nach einem der Ansprüche 1 bis 6,
**dadurch gekennzeichnet,**
**dass** mindestens ein Lagerelement (60) mit einem Ringelement (62) vorgesehen ist, wobei das Ringelement (62) zur Lagerung eines Lagerzapfens (46, 48) zwischen einer inneren Umfangsfläche (30) eines Lagerauges (26, 28) und einer äußeren Umfangsfläche (49) des Lagerzapfens (46, 48) angeordnet ist.

8. Lageranordnung nach Anspruch 7,
**dadurch gekennzeichnet,**
**dass** das Lagerelement (60) eine das Lagerauge (24, 26) und/oder den Lagerzapfen (46, 48) abdeckende Lagerkappe (64) umfasst.

9. Schwenkanordnung zum Verschwenken eines Auslegers eines Bauarbeitsgerätes, insbesondere eines Bohrgerätes, mit zwei Stellzylindern (40), welche zum Verschwenken des Auslegers gegenläufig betreibbar sind,
**dadurch gekennzeichnet,**
**dass** mindestens eine Lageranordnung (10) nach einem der Ansprüche 1 bis 8 vorgesehen ist.

10. Bauarbeitsgerät, insbesondere Bohrgerät, mit einem verschwenkbaren Ausleger,
**dadurch gekennzeichnet,**
**dass** mindestens eine Schwenkanordnung (70) nach Anspruch 9 vorgesehen ist.

## Claims

1. Bearing arrangement having
- a bearing block (20) with two bearing walls (22, 24) arranged opposite and parallel to each other, in which a bearing eye (26, 28) is formed in each case, and,
- a positioning cylinder (40) with a cylinder housing (42), which is arranged between the opposite bearing walls (22, 24) of the bearing block (20) and has bearing pins (46, 48), which extend transversely to a longitudinal axis (50) of the positioning cylinder (40) and project at least partially into the bearing eyes (26, 28) of the bearing walls (22, 24),
**characterized in that**
the bearing eyes (26, 28) in the bearing walls (22, 24) arranged parallel to each other have a closed circumferential surface (30), wherein in at least one bearing eye (26) a recess (32) extending into an outward direction is formed, into which a bearing pin (46) of the positioning cylinder (40) can be inserted by turning the positioning cylinder (40) about its longitudinal axis (50).

2. Bearing arrangement according to claim 1,
**characterized in that**
the distance of the opposite bearing walls (22, 24), the dimensioning of the bearing pins (46, 48) and the dimensioning of the at least one recess (32) are matched to each other such that the positioning cylinder (40), after having been turned about its longitudinal axis (50), can be removed from or inserted into an intermediate space (12) between the bearing walls (22, 24).

3. Bearing arrangement according to claim 1 or 2,
**characterized in that**
the positioning cylinder (40) is a hydraulic or pneumatic lifting cylinder.

4. Bearing arrangement according to any one of claims 1 to 3,
**characterized in that**
the bearing pins (46) are fixed on the positioning cylinder (40) by means of a fixing ring (56), which is arranged around an outer lateral surface (58) of the positioning cylinder (40).

5. Bearing arrangement according to any one of claims 1 to 4,
**characterized in that**
a recess (32, 34) is formed in both bearing eyes (26, 28).

6. Bearing arrangement according to claim 5,
**characterized in that**
the recesses (32, 34) in the bearing eyes (26, 28) are turned through 180° with respect to each other.

7. Bearing arrangement according to any one of claims 1 to 6,
**characterized in that**
at least one bearing element (60) with a ring element (62) is provided, wherein for the purpose of supporting a bearing pin (46, 48), the ring element (62) is arranged between an inner circumferential surface (30) of a bearing eye (26, 28) and an outer circumferential surface (49) of the bearing pin (46, 48).

8. Bearing arrangement according to claim 7,
**characterized in that**
the bearing element (60) comprises a bearing cap (64) covering the bearing eye (24, 26) and/or the bearing pin (46, 48).

9. Pivot arrangement for pivoting a boom of a construction apparatus, in particular a drilling apparatus, with two positioning cylinders (40) which can be operated counter-directionally for pivoting the boom,
**characterized in that**
at least one bearing arrangement (10) according to any one of claims 1 to 8 is provided.

10. Construction apparatus, in particular drilling apparatus, with a pivotable boom,
**characterized in that**
at least one pivot arrangement (70) according to claim 9 is provided.

## Revendications

1. Agencement d'un palier comportant
- un support de palier (20) avec deux parois de palier (22, 24) agencées l'une face à l'autre et parallèlement l'une à l'autre, dans chacune desquelles un oeil de palier (26, 28) est réalisé, et
- un cylindre de réglage (40) comprenant un boîtier de cylindre (42) qui est agencé entre les parois de palier (22, 24) en vis-à-vis du support de palier (20), et qui présente des tourillons (46, 48) qui s'étendent transversalement à un axe longitudinal (50) du cylindre de réglage (40) et pénètrent au moins partiellement dans les yeux de palier (26, 28) des parois de palier (22, 24),
**caractérisé en ce que**
les yeux de palier (26, 28) présentent dans les parois de palier (22, 24) agencées parallèlement l'une à l'autre une surface périphérique fermée (30), dans lequel dans au moins un oeil de palier (26) est réalisé un évidement (32) s'étendant vers l'extérieur, dans lequel un tourillon (46) du cylindre de réglage (40) peut être introduit par rotation du cylindre de réglage (40) autour de son axe longitudinal (50).

2. Agencement d'un palier selon la revendication 1,
**caractérisé en ce que**
la distance séparant les parois de palier (22, 24) en vis-à-vis, le dimensionnement des tourillons (46, 48) et le dimensionnement de l'au moins un évidement (32) sont adaptés les uns aux autres de sorte que le cylindre de réglage (40) puisse être retiré, après une rotation autour de son axe longitudinal (50), d'un espace intermédiaire (12) entre les parois de palier (22, 24) ou puisse être introduit dans celui-ci.

3. Agencement d'un palier selon la revendication 1 ou 2,
**caractérisé en ce que**
le cylindre de réglage (40) est un cylindre de levage hydraulique ou pneumatique.

4. Agencement d'un palier selon l'une des revendications 1 à 3,
**caractérisé en ce que**
les tourillons (46) sont fixés sur le cylindre de réglage (40) au moyen d'un anneau de fixation (56) qui est agencé autour d'une enveloppe extérieure (58) du cylindre de réglage (40).

5. Agencement d'un palier selon l'une des revendications 1 à 4,
**caractérisé en ce que**
dans les deux yeux de palier (26, 28) un évidement (32, 34) est réalisé.

6. Agencement d'un palier selon la revendication 5,
**caractérisé en ce que**
les évidements (32, 34) sont tournés dans les yeux de palier (26, 28) de 180° l'un de l'autre.

7. Agencement d'un palier selon l'une des revendications 1 à 6,
**caractérisé en ce que**
au moins un élément de palier (60) est prévu avec un élément annulaire (62), dans lequel l'élément annulaire (62) est agencé pour le logement d'un tourillon (46, 48) entre une surface périphérique intérieure (30) d'un oeil de palier (26, 28) et une surface périphérique extérieure (49) du tourillon (46, 48).

8. Agencement d'un palier selon la revendication 7,
**caractérisé en ce que**
l'élément de palier (60) comporte un chapeau de palier (64) recouvrant l'oeil de palier (24, 26) et/ou le tourillon (46, 48).

9. Agencement de pivotement pour le pivotement d'une flèche d'un engin de chantier, en particulier d'un appareil de forage, avec deux cylindres de réglage (40) qui peuvent fonctionner en sens inverse pour le pivotement de la flèche,
**caractérisé en ce que**
au moins un agencement de palier (10) selon l'une des revendications 1 à 8 est prévu.

10. Engin de chantier, en particulier appareil de forage avec une flèche pivotante,
**caractérisé en ce que**
au moins un agencement de pivotement (70) selon la revendication 9 est prévu.
